Europäisches Patentamt

European Patent Office

Office européen des brevets

(11) Publication number: **0 052 179**
**B1**

(12) **EUROPEAN PATENT SPECIFICATION**

(45) Date of publication of patent specification: **26.03.86**

(51) Int. Cl.⁴: **H 02 K 17/16,** H 02 K 1/26

(21) Application number: **81105756.1**

(22) Date of filing: **21.07.81**

(54) Axial flux electric machine.

(30) Priority: **29.07.80 AU 4753/80**
**11.11.80 AU 6426/80**

(43) Date of publication of application:
**26.05.82 Bulletin 82/21**

(45) Publication of the grant of the patent:
**26.03.86 Bulletin 86/13**

(84) Designated Contracting States:
**AT BE CH DE FR GB IT LI LU NL SE**

(56) References cited:
**EP-A-0 010 685**
**DE-A-1 638 314**
**DE-C- 819 284**
**DE-C- 833 981**
**FR-A-1 107 737**
**FR-A-1 527 434**
**GB-A- 888 515**
**US-A-1 576 002**
**US-A-2 357 017**

(73) Proprietor: **Card-O-Matic Pty Ltd.**
**20 McEnvoy Street**
**Waterloo New South Wales, 2017 (AU)**

(72) Inventor: **Stanley, Louis**
**26 Pamela Avenue**
**Peakhurst New South Wales, 2210 (AU)**

(74) Representative: **Baillie, Iain Cameron et al**
**c/o Ladas & Parry Isartorplatz 5**
**D-8000 München 2 (DE)**

Courier Press, Leamington Spa, England.

**Description**

The present invention relates to the construction of electric motors and more particularly but not exclusively to parallel flux induction motors and the rotors therefor.

As described in EP—A—0010625 it is possible to form the rotor of a parallel flux induction motor from punched metal strip, with the holes punched in the strip being aligned to form radially extending slots on the core of the rotor.

The use of axial flux induction electric motors has generally been limited to situations that do not require the motor to have a relatively large starting or stalling torque, since it has been a problem of axial flux electric motors that they do not have good low speed torque characteristics.

It is an object of the present invention to overcome or substantially ameliorate the above disadvantages.

French Patent 1107737 discloses axial flux induction electric motors which are formed from metal strip, however, the metal strip is not punched in order to provide radially extending slots, but more particularly the radially extending slots are formed in the core by means of machining. There is no consideration given in this document to increasing the torque provided by the motor by altering the configuration of the slots. Similarly, US Patent 2357107 discloses an axial flux induction electric motor with the slots merely arranged radially and being of constant cross section in the rotor. There is no consideration given in this document to increasing the torque provided by the motor by varying the configuration of the slots.

According to a first aspect of the present invention there is provided a rotor core for an axial flux induction electric machine, said core being formed of metal strip wound about a central axis thereby forming inner and outer peripheral surfaces said strip being punched to have a set of holes which are spaced longitudinally of the strip so as to form a set of substantially radially extending slots between the peripheral surfaces of the core separated by substantially radially extending walls (12), characterised in that said slots have side surfaces which diverge radially outwardly so that the cross section of the slots increases radially outwardly and adjacent slots are separated by the radially extending walls which define the said side surfaces of adjacent slots, and wherein said walls have a substantially constant cross-section.

According to second aspect of the present invention there is provided a rotor core for an axial flux induction electric machine, said core being formed of metal strip wound about a central axis thereby forming inner and outer peripheral surfaces said strip being punched to have a set of holes which are spaced longitudinally of the strip so as to form a set of slots between the periphery surfaces of the core separated by walls, characterised in that each slot commences at a point on the inner peripheral surface, branches at a point between the inner and outer peripheral surfaces to form branches which diverge to the outer peripheral surface of the core. In this second aspect of the invention there may be two branches. Independently or in addition the cross-section of the slots between the inner peripheral surface and the branch point may increase radially outwardly. It is also envisaged that the walls separating the slots may have a generally constant cross-section. A core according to either aspect of the invention may be such that holes which are exposed to the end face of the rotor when the strip is wound up, have a first portion extending to the strip edge via a slot neck portion, characterised in that each neck portion is defined between two projections which each taper so as to have a transverse width decreasing towards said neck portion. The invention also provides a rotor for an axial flux electric motor, said motor comprising a core according to either of the aspects referred to above conducting rings extending along the radially outer and inner peripheral surfaces of said core, first conducting bars extending through said slots and conductively linking said rings and further conducting bars also linking said rings but joined thereto at a longitudinally spaced location relative to the first conductive bars so that said core is substantially located between the first and further bars, characterised by having means adapted to resist the passage of current in a hoop extending around said core via said bars and rings. The resistance means may be an annular groove formed in one of said rings, for example in said outer ring.

Specific embodiments of the present invention will now be described by way of example with reference to the accompanying drawings, wherein:

Figure 1 is a schematic perspective view of a core of a rotor of a parallel flux induction electric machine;

Figure 2 is a plan view of the core of a rotor for a parallel flux induction electric machine;

Figure 3 is a segment of a metal strip which may be wound to form the core of a rotor of a parallel flux induction electric machine;

Figure 4 is a segment of a different metal strip which may be wound to form the core of a rotor for a parallel flux induction electric machine;

Figure 5 is an end elevation of a rotor of an axial flux induction electric motor;

Figure 6 is a schematic side elevation of the rotor of Figure 1 sectioned along the lines 6—6.

Figure 7 is an enlarged section view of a portion of the rotor as illustrated in Figure 6; and

Figure 8 schematically depicts a portion of the punched strip used to form the core of the rotor of Figure 1 and Figure 9 is an enlarged section view of a portion of the rotor of Figure 6.

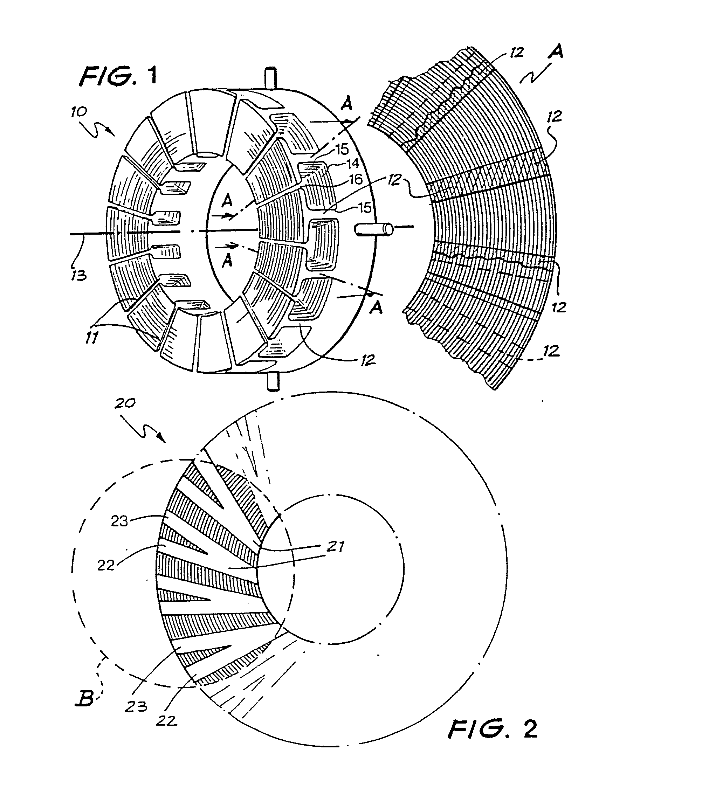

Firstly with reference to Figure 1, there is depicted the core 10 which is used to form the rotor of an axial flux induction electric motor, which core is formed of punched metal strip. The strip is wound about the axis 13 with the holes in the punched strip being radially aligned so as to form the slots 11. The slots 11 are separated by projections 12. The slots 11, as more clearly seen in insert A are formed so as to increase in cross-sectional area radially outwardly so that the cross-sectional area of the slot adjacent the axis 13 is smaller than the cross-section of the slot at a radially outwardly spaced location. Furthermore the projections 12 have a substantially constant cross-section.

The slots 11 have a base surface 14, two side surfaces 15 and a neck portion 16. Accordingly, in order for the cross-section of the slot 11 to increase, the side surfaces 15 of each individual slot must diverge radially outwardly from the axis 13. However, adjacent side surfaces 15 of adjacent slots are generally parallel so as to maintain the cross-sectional area of the projections 12 generally constant.

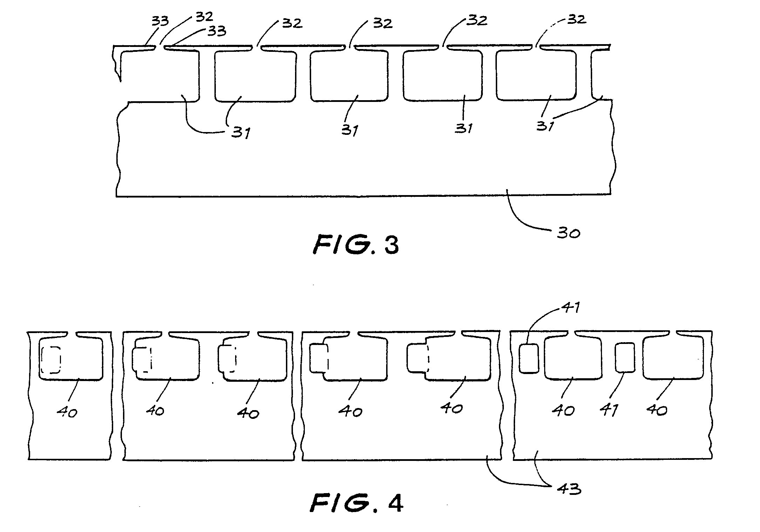

Now with reference to Figure 2, there is depicted a core 20 which may also be used to form a rotor of an axial flux induction electric machine. The rotor 20 is formed of punched metal strip which is wound about the central axis of the core 20, with the holes punched in the strip being radially aligned to form radially extending slots as illustrated in the insert B. The slots consist of main slots 21 which divide to form secondary slots 22 and 23.

In both the above described embodiments of Figures 1 and 2, the slots may be formed by the interaction of two punches which co-operate with the feed rate of the strip to form the desired slot cross section, e.g. as can more easily be seen with reference to Figure 4, each slot 40 is formed by the operation of two punches. As the feed rate of the strip 43 increases, one of the punches which initially did not engage the strip, but pass through the aperture formed by the first punch, begins to engage the strip, and therefore change the cross-sectional area of the slot to be formed. As the feed rate further increases the second punch forms a second slot 41. In the formation of either core 10 or 20, the feed rate of the strip being wound increases as the diameter of the core being formed increases.

Now with reference to Figure 3, there is illustrated a punched metal strip 30 which may be wound to form the core of the rotor of an axial flux induction electric machine. The strip 30 has punched holes 31 which have a neck aperture 32. Each aperture 32 is defined by two projections 33 which taper towards the aperture 32 so that the thickness of each projection in the plane of the strip adjacent the aperture 32 is of the order of 0,508 cm to 0,767 cm (.020 to .030 inches). Additionally, the extremities of the projections 33 may be spaced from 0,254 cm and 1,524 cm (.010 and .060 inches). The tapering of projections 33 increases the resistance to the passage of flux across the aperture 32.

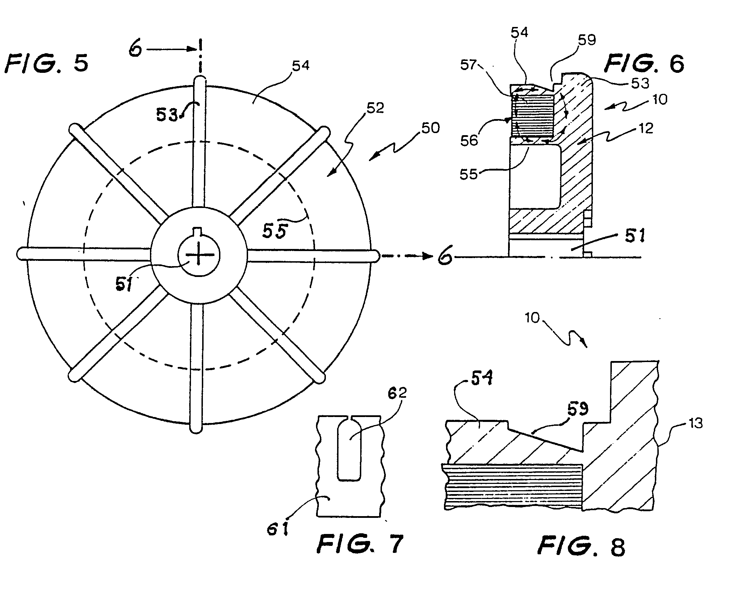

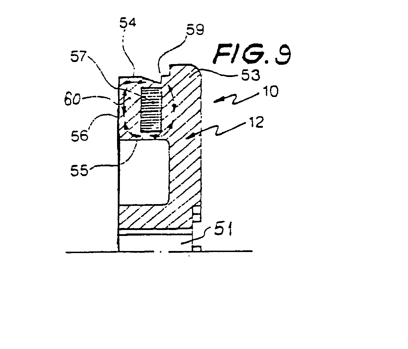

In Figures 5 to 9 there is depected a rotor 50 having a central passage 51 to receive a shaft, and a casing 52 which has an outer peripheral ring 54 and an inner ring 55 joined by radially extending conducting bars 53. The bars 53 are located on the axially outer end face of the rotor while on the axially inner face 56 the rings 54 and 55 are also joined by further radially extending conductive bars 60. These further conductive bars 60 are located in the radially extending slots in the cone. The casing 52 encompasses a rotor core 57 formed of punched metal strip 61 wound about the axis of the rotor so that the punched holes 62 in the strip 61 form radially extending grooves in the core adjacent the face 56 through which bars 60 in the face extend. In practice the field produced by the stator and which passes through the landmarked structure of the core 57 and the two sets of bars induces a current in the casing 52 which roughly follows the path indicated by the arrows. To increase the torque of this electric motor, the current induced in the casing 52 is provided with a resistance by means of the groove 59 machined in the radially outer peripheral ring 54.

Now with reference also to Figure 7 wherein there is depicted a portion of the strip which is wound to form the core 57. As can be seen, the strip portion includes a punched hole 62 which is aligned with other holes to form radially extending grooves in the face 56 within which the radially extending bars are formed. It is preferred that the area of the hole 62 be equal to or less than the longitudinal cross-sectional area of the outer peripheral ring 54.

Although the formation of the groove 59 influences the starting torque of the motor, it should further be appreciated that by forming the groove 59, the overall speed and smoothness of operation of the motor is also altered. As an example, as the size of the groove 59 is increased, the speed of the motor is correspondingly decreased together with the smoothness of operation of the motor. Accordingly the motor characteristics can to some extent be predetermined by the formation of a groove 59 of a particular configuration.

## Claims

1. A rotor core (10) for an axial flux induction electric machine, said core (10) being formed of metal strip wound about a central axis (13) thereby forming inner and outer peripheral surfaces said strip being punched to have a set of holes (31, Fig. 3) which are spaced longitudinally of the strip so as to form a set of substantially radially extending slots between the peripheral surfaces of the core (10) separated by substantially radially extending walls (12), characterised in that said slots (11) have side surfaces (15) which diverge radially outwardly so that the cross section of the slots (11) increases radially outwardly and adjacent slots (11) are separated by the radially extending walls (12) which define the said side surfaces (15) of adjacent slots (11), and wherein said walls (12) have a substantially constant cross-section.

2. A rotor core (20) for an axial flux induction electric machine, said core (20) being formed of metal strip wound about a central axis thereby forming inner and outer peripheral surfaces said strip being punched to have a set of holes which are spaced longitudinally of the strip so as to form a set of slots between the peripheral surfaces of the core (20) separated by walls, characterised in that each slot (21, 22, 23) commences at a point on the inner peripheral surface, branches at a point between the inner and outer peripheral surfaces to form branches which diverge to the outer peripheral surface of the core (20).

3. A core (20) according to claim 2 characterised in that there are two branches.

4. A core (20) according to claim 2 or 3 characterised in that the cross-section of the slots (21) between the inner peripheral surface and the branch point increases radially outwardly.

5. A core (20) according to claim 2, 3 or 4 characterised in that the walls separating the slots have a generally constant cross-section.

6. A core according to any of claims 1 to 5, wherein holes which are exposed to the end face of the rotor when the strip is wound up, have a first portion (31) extending to the strip edge via a slot neck portion (32), characterised in that each neck portion (32) is defined between two projections (33) which each taper so as to have a transverse width decreasing towards said neck portion (32).

7. A rotor (50) for an axial flux electric motor, said motor (50) comprising a core (10, 20) according to any one of claims 1 to 6, conducting rings (54, 55) extending along the radially outer and inner peripheral surfaces of said core (10, 20), first conducting bars (60) extending through said slots (21, 23) and conductively linking said rings (54, 55) and further conducting bars (53) also linking said rings (54, 55) but joined thereto at a longitudinally spaced location relative to the first conductive bars (60) so that said core (10, 20) is substantially located between the first and further bars (53, 60), characterised by having means (59) adapted to resist the passage of current in a loop extending around said core (10, 20) via said bars (53, 60) and rings (54, 55).

8. A rotor (50) according to claim 7 wherein said resistance means (59) is an annular groove (59) formed in one of said rings (54, 55).

9. A rotor (50) according to claim 8 wherein said groove (59) is formed in said outer ring (54).

**Patentansprüche**

1. Läuferkern für eine elektrische Asynchronmaschine mit axialem Kraftfluß, wobei der Kern (10) aus einem Metallband besteht, das um eine zentrale Achse (13) gewickelt ist und daher eine Innen- und eine Außenumfangsfläche besitzt und das mit einem Satz von ausgestanzten Löchern (31, Figur 3) ausgebildet ist, die in der Längsrichtung des Bandes in Abständen voneinander angeordnet sind, so daß sie einen Satz von Schlitzen bilden, die sich zwischen den Umfangsflächen des Kerns (10) im wesentlichen radial erstrecken und voneinander durch im wesentlichen radiale Wände (12) getrennt sind, dadurch gekennzeichnet, daß die Seitenwandungen (15) der Schlitze (11) radial auswärts divergieren, so daß der Querschnitt der Schlitze (11) radial auswärts zunimmt, und daß die genannten Seitenwandungen (15) von einander benachbarten Schlitzen (11) von den diese trennenden, radialen Wänden (12) gebildet werden, die einen im wesentlichen konstanten Querschnitt besitzen.

2. Läuferkern (20) für eine elektrische Induktionsmaschine mit axialem Kraftfluß, wobei der Kern (20) aus einem Metallband besteht, das um eine zentrale Achse gewickelt ist und daher eine Innen— und eine Außenumfangsfläche besitzt und das mit einem Satz von ausgestanzten Löchern ausgebildet ist, die in der Längsrichtung des Kerns in Abständen voneinander angeordnet sind, so daß sie einen Satz von durche Wände voneinander getrennten Schlitzen zwischen den Umfangsflächen des Kerns (20) bilden, dadurch gekennzeichnet, daß jeder Schlitz (21, 22, 23) an einem Punkt der Innenumfangsfläche beginnt und sich an einer Stelle zwischen der Innen— und der Außenumfangsfläche unter Bildung von Zweigen verzweigt, die bis zu der Außenumfangsfläche des Kerns (20) divergieren.

3. Kern (20) nach Anspruch 2, dadurch gekennzeichnet, daß zwei Zweige vorhanden sind.

4. Kern (20) nach Anspruch 2 oder 3, dadurch gekennzeichnet, daß der Querschnitt der Schlitze (21) zwischen der Innenumfangsfläche und dem Verzweigungspunkt radial auswärts zunimmt.

5. Kern (20) nach Anspruch 2, 3 oder 4, dadurch gekennzeichnet, daß die die Schlitze voneinander trennenden Wände einen allgemein konstanten Querschnitt besitzen.

6. Kern nach einem der Ansprüche 1 bis 5, in dem Löcher, die beim Wickeln des Bandes zu der Stirnfläche des des Läufers hin freiliegen, einen ersten Teil (31) besitzen, der sich über einen verengten Schlitzteil (32) bis zum Rand des Bandes erstreckt, dadurch gekennzeichnet, daß jeder verengte Teil (32) von zwei Vorsprüngen (33) begrenzt ist, von denen jeder derart verjüngt ist, daß seine Breite zu dem verengten Teil (32) hin zunimmt.

7. Läufer (50) für einen Elektromotor mit axialem Kraftfluß, wobei der Läufer (50) einen Kern (10, 20) nach einem der Ansprüche 1 bis 6 besitzt, ferner leitende Ringe (54, 55), die sich längs der radial äußeren und inneren Umfangsfläche des Kerns (10, 20) erstrecken, erste leitende Stäbe (60), die die Schlitze (21, 23) durchsetzen und die Ringe (54, 55) leitend miteinander verbinden, und weitere leitende Stäbe (53), die ebenfalls die Ringe (54, 55) miteinander verbinden, aber mit diesen an einer Stelle verbunden sind, die im Längsabstand von den ersten leitenden Stäben (60) angeordnet ist, so daß der Kern (10, 20) im wesentlichen zwischen den ersten und den weiteren Stäben (53, 60) angeordnet ist, gekennzeichnet durch Mittel (59), die geeignet sind, einem Stromfluß in einer den Kern (10, 20) umgebenden Schleife über die Stäbe (53, 60) und Ringe (54, 55) einen Widerstand entgegenzusetzen.

8. Läufer (50) nach Anspruch 7, dadurch gekennzeichnet, daß die Widerstandsmittel (59) von einer in einem der Ringe (54, 55) ausgebildeten Ringnut (59) gebildet werden.

9. Läufer (50) nach Anspruch 8, dadurch gekennzeichnet, daß die Nut (59) in dem äußeren Ring (54) ausgebildet ist.

## Revendications

1. Noyau (10) de rotor destiné à une machine électrique d'induction à flux axial, le noyau (10) étant formé d'une bande métallique enroulée autour d'un axe central (13) et formant ainsi des surfaces périphériques interne et externe, la bande étant perforée afin qu'elle comporte un jeu de trous (31, figure 3) espacés suivant la longueur de la bande et destinés à former un jeu de fentes sensiblement radiales entre les surfaces périphériques du noyau (10), séparées par des parois sensiblement radiales (12), caractérisé en ce que les fentes (11) ont des surfaces latérales (15) qui divergent radialement vers l'extérieur si bien que la section des fentes (11) augmente radialement vers l'extérieur et les fentes adjacentes (11) sont séparées par les parois radiales (12) qui délimitent les surfaces latérales (15) des fentes adjacentes (11), et lesdites parois (12) ont une section sensiblement constante.

2. Noyau (20) de rotor destiné à une machine électrique d'induction à flux axial, le noyau (20) étant formé d'une bande métallique enroulée autour d'un axe central, formant ainsi des surfaces périphériques interne et externe, la bande étant perforée afin qu'elle ait un jeu de trous espacés suivant la longueur de la bande et destinée à former un jeu de fentes entre les surfaces périphériques du noyau (20) séparées par des parois, caractérisé en ce que chaque fente (21, 22, 23) commence en un point de la surface périphérique interne, se divise en un point compris entre les surfaces périphériques interne et externe et forme des dérivations qui divergent vers la surface périphérique externe du noyau (20).

3. Noyau (20) selon la revendication 2, caractérisé en ce qu'il comporte deux dérivations.

4. Noyau (20) selon l'une des revendications 2 et 3, caractérisé en ce que la section des fentes (21) entre la surface périphérique interne et le point de dérivation augmente radialement vers l'extérieur.

5. Noyau (20) selon l'une quelconque des revendications 2, 3 et 4, caractérisé en ce que les parois séparant les fentes ont une section constante de façon générale.

6. Noyau selon l'une quelconques des revendications 1 à 5, dans lequel des trous qui sont exposés à la face d'extrémité du rotor lorsque la bande est enroulée, ont une première partie (31) atteignant le bord de la bande par une partie (32) formant un col de fente, caractérisé en ce que chaque partie formant un col (32) est délimitée entre deux saillies (33) qui ont chacune une dimension qui diminue de manière que leur largeur transversale diminue vers la partie formant un col (32).

7. Rotor (50) destiné à un moteur électrique à flux axial, le rotor (50) comprenant un noyau (10, 20) selon l'une quelconque des revendications 1 à 6, des bagues conductrices (54, 55) disposées le long des surfaces périphériques radialement externe et interne du noyau (10, 20), des premières barres conductrices (60) passant dans les fentes (20, 23) et reliant par conduction les bagues (54, 55), et des barres conductrices supplémentaires (53) reliant aussi les bagues (54, 55) mais raccordées à celles-ci à un emplacement longitudinalement espacé par rapport aux premières barres conductrices (60) si bien que le noyau (10, 20) est pratiquement disposé entre les premières barres et les barres supplémentaires (53, 60), caractérisé en ce qu'il comporte un dispositif (59) destiné à résister à la circulation du courant dans une boucle formée autour du noyau (10, 20) par l'intermédiaire des barres (53, 60) et des bagues (54, 55).

8. Rotor (50) selon la revendication 7, dans lequel le dispositif destiné à présenter une résistance (59) est une gorge annulaire (59) formée dans l'une des bagues (54, 55).

9. Rotor (50) selon la revendication 8, dans lequel ladite gorge (59) est formée dans la bague externe (54).

0 052 179

FIG. 1

FIG. 2

**FIG. 3**

**FIG. 4**

**0 052 179**

FIG. 5

FIG. 6

FIG. 7

FIG. 8

3

FIG. 9